# EUROPEAN PATENT SPECIFICATION

(11) **EP 2 956 227 B1**
(45) Date of publication and mention of the grant of the patent: **31.05.2017**
(21) Application number: 14715112.0
(22) Date of filing: 14.02.2014
(51) Int. Cl.: B01D 39/16

(54) **METHOD FOR MAKING A FILTERING ELEMENT AND FILTERING ELEMENT**
VERFAHREN ZUR HERSTELLUNG EINES FILTERELEMENTES UND FILTERELEMENT
PROCÉDÉ DE FABRICATION D'UN ÉLÉMENT FILTRANT ET ÉLÉMENT FILTRANT

(30) Priority: 15.02.2013 IT MO20130035
(43) Date of publication of application: 23.12.2015
(73) Proprietor: Sarong Societa' Per Azioni, 42046 Reggiolo (RE) (IT)
(72) Inventor: BARTOLI, Andrea, I-42123 Reggio Emilia (IT); CAPITINI, Davide, I-42123 Reggio Emilia (IT); GRILLENZONI, Alessandro, 42018 San Martino in Rio ( RE) (IT); TRALDI, Flavio, I-41030 San Prospero (Modena) (IT)
(74) Representative: Persi, Patrizia
(86) International application number: PCT/IB2014/058994
(87) International publication number: WO 2014/125440

(56) References cited:
- EP-A1- 2 229 993
- DE-A1- 4 110 117
- US-A- 2 521 984
- US-A- 4 701 197
- US-A1- 2007 271 887

## Description

The invention relates to filtering elements to be associated with containers or for forming a filtering casing being intended to contain or retain an initial product and in particular, it relates to a method of making said filtering element. In the containers (capsules) or casings (pods) for beverages, used in automatic dispensing machines, the filtering elements contain and/or retain a product to be combined with a liquid to obtain a final product, typically a hot beverage, for example coffee or tea. Disposable capsules are known, sealed with an internal filtering element, comprising an impermeable external container or casing, glass- or cup- shaped, provided with a bottom wall and with a side wall that define a cavity provided with an upper opening. The latter is closed hermetically by a cover in such a manner as to seal inside the casing the filtering element, or filter, containing the product from which to obtain the final product (beverage) by means of percolation or infusion.

In one type of capsule, to obtain a final product by percolation or infusion of the final product, the filter, which is shaped as a bag in such a manner as to make a respective cavity that is open upwards to contain the initial product, is fixed, in particular welded, to the side wall of the casing at an upper peripheral side thereof that is typically flange-shaped. The filter divides the interior of the casing into a first upper chamber containing the product and which is accessible through the upper opening of the casing (to permit filling thereof) and a second lower chamber, comprised between the filter and the bottom wall and/or the side wall of the casing, which enables the beverage obtained from the initial product to be removed.

In known machines for making capsules for beverages, the filters are formed separately by bending portions of suitable dimensions obtained by cutting or shearing a film of filtering material unwound from a reel. Once the filters have been formed they are then inserted into and fixed to the respective previously formed capsules.

Filtering casings are also known, so-called filtering pods, formed by a folded filtering element, or by two suitably joined filtering elements, in such a manner as to enclose and contain a dose of initial product, typically coffee. The filtering pods are used in the same way as capsules in dispensing machines for dispensing a final product by percolation. Filtering elements are further used in other types of container to separate a cavity or chamber containing a product from an adjacent chamber or from the external environment.

Containers are known for air fresheners that comprise a casing in the form of a bowl or cup that contains a deodorant product and is closed by a filtering or breathable element that prevents the product escaping but allows air to pass and thus the deodorizing essence to be propagated and diffused in the environment.

Containers are known in which a filtering element separates the internal cavity into two or more chambers containing distinct products.

The filtering elements can be made of filter paper, material that is permeable to liquids and to air, is light, thin and can be easily cut.

The filter paper nevertheless has very low resistance to tensile stress, so that in use it can easily lacerate or break. For example, in the case of capsules for beverages, laceration or breaking of the filter and the consequent release of the initial product into the final product is frequent, the final product thus being altered. The pressure of the liquid delivered to the capsule together with the weight of the initial wet product often cause the filter to be lacerated or broken in one or more places and/or the latter to be partially or totally detached from the container.

This drawback is found in pods for beverages, which often tear during extraction from the dispensing machine.

Filtering elements are also known that are made with films or sheets of non-woven material, which has stratified or crossed fibres joined together mechanically, by using adhesives or by thermal processes. The fibres comprise threads of synthetic and/or plastic material, typically threads of polyester, polypropylene and polyamide. The filters made of non-woven material, although they ensure the same performance as the filter paper in terms of filtration, are much more resistant mechanically, in particular to traction.

The documents EP 2 229 993 A1, US 2 521 984 A, US 4 701 197 A, US 4 701 197 A, US 2007/271887 A1 disclose a filtering elements made of a non -woven material comprising synthetic thermoplastic fibers. Said filtering elements comprise a peripheral lip/ring, which is formed by compression and fusion of the fibers of the non-woven material.

Many of the filtering elements made of non-woven material have the drawback of being difficult to cut and shear, making it difficult to use them in known machines for making containers provided with filtering elements. Owing to the structure of the light, soft and low-density non-woven material, it is in fact difficult to obtain a clean and precise cut, i.e. obtain portions of film with cut edges that are devoid of protruding threads or partially cut fibres. The filtering elements that are thus obtained and used, for example in the capsules and pods for beverages, are not generally acceptable, both for aesthetic reasons and because of the risk that portions and parts of threads/fibres can become detached during use of the filtering element reaching the final product, thus adulterating the final product. The mechanical cutting devices generally used have to be very sharp and be frequently replaced to ensure a satisfactory and constant cutting quality, with consequent long machine downtime and high maintenance costs. The use of laser-cutting devices is excessively expensive and is not much suitable for use on machines with a high productive rate.

Filtering elements made of non-woven material are moreover difficult to perforate because the non-woven material tends to become deformed and locally elongated, thus preventing perforation thereof. In capsules provided with filtering elements, the latter are thus not perforable by liquid delivering nozzles of the dispensing machine. The filtering elements are thus formed open, closed above by a cover made with an easily perforable metal or plastic film.

The filtering elements made of non-woven material of great thickness (1-3 mm) and/or low density are then difficult to weld to the walls or to the edges of the corresponding container, requiring long welding time that slows down the productive cycle of the machine, reducing the productivity thereof.

In the field of containers for food, following the requirement to sort solid urban waste, the need has recently emerged to dispose of containers, once they have been used, by separating the containers into components on the basis of the material of which they are made, in particular dividing the external casing of plastic or metal (aluminium) from the internal filter containing a food, i.e. organic, product.

Removing filters in the known containers is nevertheless very complex and difficult because the filter is not graspable directly by the user and being welded to the walls or to the edge of the casing it can be detached only with great difficulty, with the concrete risk of tearing and breaking in the operation, releasing the residual initial product, this entailing problems of hygiene and cleanliness.

An object of the present invention is to improve the known methods for making filtering elements for containers, in particular filtering elements made of non-woven material and intended for containing and/or retaining a product.

Another object is to provide a method that enables a filtering element of non-woven material to be made that is provided with portions that can be cut and sheared cleanly and precisely so as to generate cut edges that are devoid of protruding threads or of portions or residues of detachable threads.

A further object is to provide a method that enables a filtering element made of a non-woven material provided with portions that can be easily perforated and traversed, for example by injection means of the dispensing machine, to be obtained.

Still another object is to provide a method that enables a filtering element made of non-woven material provided with portions that can be easily and firmly fixed, in particular welded to a respective container, to be made.

Still another object is to make a filtering element that can be firmly fixed to a container in such a manner as not to become detached in use and can at the same time be easily detached and removed from the container by a user in a disposable step after use.

In a first aspect of the invention a method is provided for making a filtering element according to claim 1.

In a second aspect of the invention a filtering element according to claim 11 is provided.

In a third aspect of the invention a container is provided comprising the filtering element of the second aspect and according to claim 13.

The invention can be better understood and implemented with reference to the attached drawings that illustrate some embodiments thereof by way of non-limiting example, wherein:
Figure 1 is a schematic plan view of operating steps of the method of the invention;
Figure 2 is a cross section of a filtering element of the invention associated with a container;
Figure 3 is a plan view of a version of the filtering element of the invention;
Figure 4 is a cross section of the filtering element of figure 3 associated with a container;
Figure 5 is a schematic plan view of the method of the invention for making another version of the filtering element;
Figure 6 is a cross section of the filtering element of figure 5 associated with another container.

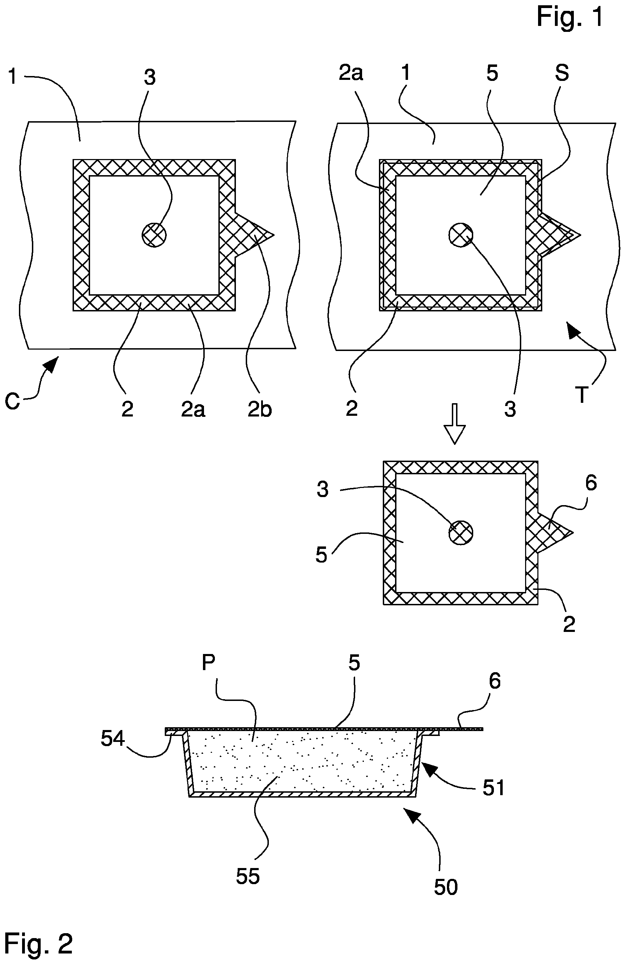

With reference to figure 1, there are schematically illustrated the steps of the method of the invention for making a filtering element 5 from a film 1 of non-woven material that is associable with a container, for example a capsule that is usable in a dispensing machine for beverages or a container for air fresheners, or arranged for forming a filtering casing that is suitable for enclosing and containing an initial product, for example a pod that is usable in a dispensing machine for beverages.

The film 1 of non-woven material is a material of known type containing fibres of synthetic and/or plastic material such as nylon, polyester, polyethylene, polypropylene and polyamide joined together, interwoven and/or superimposed by mechanical or thermal means or by coupling with binding substances.

The film 1 is typically supplied in rolls of various dimensions and thicknesses and is then unwound to be subjected to the various steps of the method.

The method comprises a hot compression step C wherein at least one defined portion of the film 1 is hot pressed that is intended to be contained in the filtering element 5 to be made by suitable compressing means such as, for example, hot shaped moulds, not illustrated in the figures, in such a manner as to obtain at least one corresponding pressed portion 2 in which the fibres of at least one external surface layer of the non-woven material are compacted and pressed together and in which a thickness of said non-woven material is reduced by a percentage comprised between 30 and 50% with respect to the thickness of the non-compressed non-woven material.

Preferably, the non-woven material is hot-pressed on both sides of the film 1 in such a manner that respective fibres of external and opposite surface layers of said non-woven material are pressed and compacted. After hot compression the fibres are substantially alongside and adjacent with a substantial reduction of the passages (pores) between adjacent fibres and thus with a local increase of the density of the non-woven material, which is more compact.

Hot compression is further such as to melt at least partially a respective surface layer of each fibre in such a manner as to join together the fibres, in particular in a reversible manner to enable, in a step after mechanical treatment of the pressed portion 2, the fibres to be separated and removed again, returning the non-woven material to a state that is similar to the original state.

During the compression step, on the defined portion of non-woven material a pressure is exerted that is comprised between 0.1 and 1.0 MPa, in particular comprised preferably between 0.2 and 0.6 MPa, at a temperature comprised between 80°C and 250°C, in particular comprised preferably between 110°C and 230°C for a pressure time comprised between 0.1 sec. and 4 sec., in particular preferably comprised between 0.3 sec. and 1 sec. The pressure, temperature and compression time values vary according to the features of the non-woven material.

Experimental tests have shown that the localised hot pressure of the non-woven material leads to a substantially reversible variation in the physical and mechanical features of said non-woven material in the aforesaid pressed portion 2.

In particular, through the effect of the compacting and partial joining (partial and surface melting) of the fibres of the surface layers of the non-woven material, in the pressed portion 2 there is observed, in addition to a decrease of the thickness, a greater density of the material, greater resistance to tensile stress, to penetration, to cutting and less permeability in relation to liquids. The greater resistance to tensile stress and penetration also cause less pliability and elastic plastic elongation of the non-woven material.

In terms of external appearance, a change of colour is noted (from opaque to shiny) and a variation in consistency (increase in stiffness).

The tests conducted on a plurality of non-woven materials with different combinations of pressure, temperature and pressure time have shown an increase in resistance to tensile stress comprised between 70 and 100%, an increase in resistance to static punching comprised between 60 and 90% and a decrease in the permeability in relation to liquids (ethyl alcohol) comprised between 60 and 80%.

An effect of the hot pressure of the non-woven material is that the latter, after being cooled to a temperature that is not greater than 35°, can be cut or sheared in the pressed portion 2 by known mechanical means, such as punches and dies, rotating blades or shears, precisely and cleanly so as to generate filtering elements, having cut edges devoid of protruding fibres, or of portions or residues of detachable fibres. In other words, it is possible to obtain by cutting or shearing from a film of non-woven material filtering elements 5 that are associable in containers for innumerable uses.

For example, the filtering elements 5 can be used in capsules for beverages for containing and/or separating an initial product, for example coffee or tea, from which to obtain by means of percolation or infusion a final product, typically a beverage.

The filtering elements of thus cut non-woven material can also be used to close containers that contain a food product or an air freshener or an object.

It is also possible to obtain by cutting or shearing of the film of non-woven material filtering elements that are usable for forming casings or filtering pods that enclose and contain a dose of initial product, typically coffee. The pods can consist of a single filtering element folded and closed peripherally around the dose of initial product. Owing to the variations in the physical and mechanical features of the non-woven material determined by the hot pressure in the aforesaid pressed portion 2, the latter is thus easily perforable and traversable, for example by dispensing means of a dispensing machine. The non-woven material has, in fact, in the pressed portion 2 a structure with greater density having greater resistance to tensile stress and punching and less local deformation and elongation, which are features that permit easy perforation thereof.

It should be noted that the variation in the physical and mechanical features of the non-woven material in the aforesaid pressed portion 2 is reversible, at least partially. It has in fact been observed that by subjecting the aforesaid pressed portion 2 to longitudinal and/or transverse traction the fibres of the external surface layers tend to become separated and move away, returning to a configuration that is substantially similar to that of the original non-woven material.

This can be advantageous in a possible subsequent step of treating a filtering element having a pressed portion wherein for example deformation thereof is provided. As deformation of the filtering element cannot be effectively carried out with the same results both in zones of the pressed portion, whose fibres are able to return to a configuration similar to the original non-woven material, and in zones of non-woven material that have not been hot-pressed, the pressed portion can also be made with dimensions that are slightly greater than what is strictly necessary. The localised hot pressure step of the film 1 of non-woven material can thus be performed without strict precision requirements.

Another effect of the hot pressure exerted on films of non-woven material having great thickness (from 1 to 3 mm) and/or having low density is that the pressed portion 2, after hot compression, is easier to weld thermally to the casing of the capsule. By virtue of the reduced thickness and greater density of the non-woven material in the pressed portion it is thus easier to transmit heat to the below casing to activate the welding layer thereof. It is thus possible to reduce considerably welding time, increasing machine productivity and obtaining welding of better quality.

Through the effect of the greater density of the non-woven material in the pressed portion it is further possible to weld the filtering element to the casing of the capsule also through ultrasound welding.

With reference to the steps of the method specified in figure 1, in the hot compression step C a pressed portion 2 and a further pressed portion 3 are made. The pressed portion 2 comprises a first annular zone 2a that bounds and defines the shape of the filtering element 5 to be made and at least one second zone 2b intended for making in the filtering element 5 a gripping portion 6 for the user, as explained better below in the description. The further pressed portion 3 is on the other hand intended to form a perforation zone in the filtering element 5.

The method of the invention provides a stabilising step of the shape of said pressed portion by further compressing means, that is similar to the compressing means used in the hot pressure step but in this case the compressing means is not heated or even cooled. The stabilising step comprises cooling by contact, for example for a time from 0.5 to 4 sec., by means of the further compressing means, the pressed portion 2 until the pressed portion 2 has a temperature below or the same as 35°.

In a cutting step T the film 1 is cut or sheared to obtain the filtering element 5.

The cutting step T is performed after the hot compression step C and after the stabilising step and cutting or shearing is performed at the pressed portion 2, and stabilised, along a cutting line S so as to ensure a clean and precise cut. The filtering element 5 that is thus obtained thus has cleanly cut edges that are devoid of protruding fibres, or of portions or residues of detachable fibres.

The substantially flat filtering element 5 that is thus obtained can be fixed to a peripheral edge 54 of a casing 51 of a container 50 to close a product P inside a cavity 55 of the latter (Figure 2).

The container 50 is, for example, a container for air fresheners and the filtering element 5 prevents the product P coming out but enables the air to pass and thus the deodorant essence to propagate and diffuse in the environment.

The filtering element 5 can be associated with and also fixed to a capsule, which is not illustrated, which is usable in a dispensing machine to obtain beverages.

The cut made along the pressed portion 2, in particular along the first zone 2a and the second zone 2b, along the cutting line S also enables the gripping portion 6 to be made. The gripping portion 6, in which the non-woven material has been subjected to hot pressure, owing to the increased mechanical performance (greater density and greater resistance to tensile stress) enables the user to detach and remove the filtering element 5 easily from the container 50 without the aforesaid filtering element 5 getting torn or breaking.

In the case of containers or capsules for beverages it is thus possible after use in the dispensing machine to separate easily and effectively the casing 51 made of plastics or metal (aluminium) of the container 50 from the filtering element 5 containing the food and organic product P in such a manner as to meet the requirements of solid urban waste sorting.

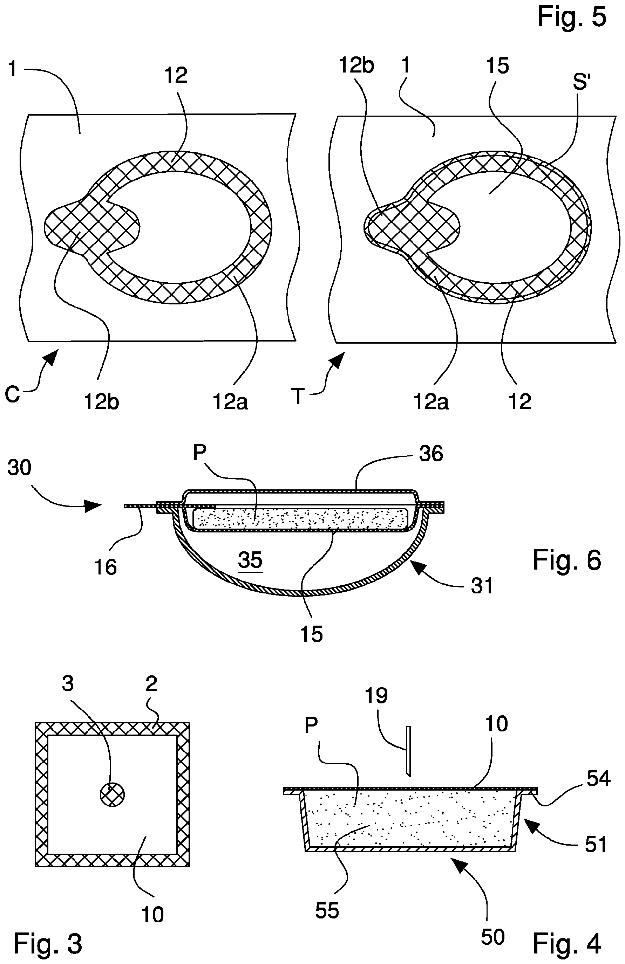

Figure 3 illustrates a version of the filtering element 10 that is devoid of the gripping portion. The further pressed portion 3 of the filtering element 10 is in this case intended to permit easy perforation by suitable perforating means 19 for accessing the product P contained in the container 50 to which the filtering element 10 is fixed.

Figure 5 illustrates the hot compression C and cutting T operating steps of the method of the invention, the stabilising step not being represented, to obtain a version of the filtering element 15 having a substantially elliptic step. Also in this case, by hot-pressing the film 1 a pressed portion 12 is obtained comprising a first annular zone 12a, that bounds and defines the shape of the filtering element 15 to be made, and a second zone 12b intended to make in the filtering element 15 a gripping portion 16 for the user. The second zone 12b extends, in this version of the filtering element 15, inside and outside the first annular zone 12a.

In the cutting step T the cut is performed at the pressed portion 12, and stabilised, along a cutting line S' so as to ensure a clean and precise cut. The filtering element 15 that is thus obtained has edges sheared cleanly, cut devoid of protruding fibres, or of portions or residues of detachable fibres.

The filtering element 15 can be associated with a container 30 comprising a casing 31 defining a respective cavity 35. The filtering element 15 is formed in such a manner as to make a housing that is suitable for supporting a product P, for example a food product. The container 30 comprises a closing element 36 arranged for closing the cavity 35.

By cutting along the second zone 12b, it is possible to make a gripping portion 16 that extends on opposite sides, outside and inside the casing 31 of the container 30. By grasping the external part of the gripping portion 16 a user can easily detach and separate from the casing 31 the filtering element 15 with the product P. The gripping portion 16, owing to the features of the locally hot-pressed non-woven material, ensures mechanical resistance and prevents tearing of the filtering element 15. It should be noted that the internal part of the gripping portion 16 that protrudes inside the cavity 35 of the container 30 eases and facilitates the detachment of the filtering element from the casing 31 preventing the breakage or tearing thereof.

In one version of the embodiment of the invention that is not illustrated, the non-woven material of the filtering element is hot-pressed after the latter has been cut and detached from the film 1. In this case, the cutting step T precedes the hot compression and stabilisation step C. The hot pressure step can be performed whilst the filtering element is fixed to a respective container. The hot pressure makes a pressed portion that can comprise a gripping portion for enabling the user to detach and remove the filtering element easily from the container or a portion intended to be perforated.

The filtering element can be further used to make a filtering casing, for example a filtering pod for percolatable or infusion products that is suitable for containing a product. The filtering pod can be made by joining together two filtering elements provided with respective pressed portions along which they are joined, for example welded, to enclose and contain the dose of initial product. The pressed portions comprise and form a gripping portion that enables a user to remove the pod from the dispensing machine. The gripping portion, owing to the features of the locally hot-pressed non-woven material, ensures mechanical resistance and prevents laceration of the pod during the operation of extraction from the dispensing machine.

## Claims

1. Method for making a filtering element (5; 10; 15) from a film (1) of non-woven material, said filtering element (5; 10; 15) being suitable for being associated with a container (30; 50) for containing and/or retaining a product (P), said method comprising hot pressing at least one defined portion of said non-woven material, so as to obtain a pressed portion (2, 3; 12) in which fibres, in particular synthetic and/or plastic fibres, of at least one external surface layer of said non-woven material are compacted and pressed together **characterized in that** said hot pressing comprises exerting on said defined portion a pressure comprised between 0.1 and 1.0 MPa to reduce a thickness of said non-woven material by a percentage comprised between 30 and 50% with respect to the thickness of the non-compressed non-woven material in such a manner as to melt at least partially a respective surface layer of each fibre so as to join together said fibres in a reversible manner, enabling the non-woven material to return to a state that is similar to the original state, that said hot pressing comprises pressing said defined portion at a temperature comprised between 80°C and 250°C and **in that** said hot pressing comprises pressing said defined portion for a time comprised between 0.1 sec. and 4 sec..

2. Method according to claim 1, wherein said hot pressing comprises pressing on opposite sides said non-woven material in such a manner as to compact and press respective fibres of external and opposite surface layers of said non-woven material.

3. Method according to any preceding claim, wherein said hot pressing comprises exerting on said defined portion a pressure comprised between 0.2 and 0.6 MPa.

4. Method according to any preceding claim, wherein said temperature is comprised between 110°C and 230°C.

5. Method according to any preceding claim, wherein said time is comprised between 0.3 sec. and 1 sec.

6. Method according to any preceding claim, and comprising stabilising a shape of said pressed portion (2, 3; 12), wherein said stabilising comprises cooling by contact, for example for a time from 0.5 sec. to 4 sec., said pressed portion (2, 3; 12) until said pressed portion (2, 3; 12) reaches a temperature below 35°.

7. Method according to any preceding claim, and comprising cutting said film (1) to obtain said filtering element (5; 10; 15).

8. Method according to claim 7, as appended to claim 6, wherein said cutting is made after said stabilising, said cutting comprising cutting said material at said pressed and stabilised portion (2; 12).

9. Method according to claim 7, wherein said cutting is made before said hot pressing.

10. Method according to any preceding claim, and comprising cutting said pressed portion (2; 12) to make a gripping portion (6; 16) of said filtering element (5; 15) graspable by a user.

11. Filtering element (5; 10; 15) of non-woven material made by the method according to any one of claims 1 to 10, said filtering element (5; 10; 15) being suitable for being associated with a container (30; 50) or for forming a filtering casing being arranged for containing and/or retaining a product (P) and comprising at least one hot pressed portion (2, 3; 12) in which fibres, in particular synthetic and/or plastic fibres, of at least one external surface layer of said non-woven material are compacted and pressed together **characterized in that** a thickness of said non-woven material in said hot pressed portion (2, 3; 12) is reduced by a percentage comprised between 30 and 50% with respect to the thickness of the non-compressed non-woven material and **in that** respective surface layers in said hot pressed portion (2, 3; 12) are at least partially melted and said fibres are joined together in a reversible manner, enabling the non-woven material to return to a state that is similar to the original state.

12. Filtering element according to claim 11, wherein said pressed portion (2, 3; 12) comprises two external and opposite surface layers wherein said fibres are compacted and pressed together.

13. Container comprising a casing (31; 51) provided with a cavity (35; 55) containing a filtering element or closed by a filtering element (5; 10; 15), according to claim 11 or 12.

## Patentansprüche

1. Verfahren zum Herstellen eines Filterelements (5; 10; 15) aus einem Film (1) eines Vliesmaterials, wobei das Filterelement (5; 10; 15) geeignet ist, um einem Behälter (30; 50) zum Enthalten und/oder Zurückhalten eines Produkts (P) zugeordnet zu werden, wobei das Verfahren ein Heißpressen von zumindest einem definierten Teil des Vliesmaterials derart umfasst, dass ein gepresstes Teil (2, 3; 12) erhalten wird, in dem Fasern, insbesondere synthetische und/oder Kunststofffasern, von zumindest einer externen Oberflächenschicht des Vliesmaterials verdichtet und zusammengepresst sind, **dadurch gekennzeichnet, dass** das Heißpressen das Ausüben eines solchen Drucks auf den definierten Teil umfasst, der bei 0,1 bis 1,0 MPa liegt, um eine Dicke des Vliesmaterials um einen prozentualen Anteil zu reduzieren, der bei 30 % bis 50 % in Bezug auf die Dicke des nicht komprimierten Vliesmaterials liegt, und zwar auf solch eine Weise, dass zumindest teilweise eine entsprechende Oberflächenschicht einer jeden Faser derart geschmolzen wird, dass die Fasern auf reversible Weise zusammengefügt werden, welche es dem Vliesmaterial ermöglicht, in einen Zustand zurückzukehren, der ähnlich zu dem ursprünglichen Zustand ist, dass das Heißpressen ein Pressen des definierten Teils bei einer Temperatur umfasst, die bei 80 °C bis 250 °C liegt, und dass das Heißpressen ein Pressen des definierten Teils für eine Zeit umfasst, die bei 0,1 s bis 4 s liegt.

2. Verfahren gemäß Anspruch 1, wobei das Heißpressen ein Pressen auf gegenüberliegende Seiten des Vliesmaterials auf solch eine Weise umfasst, dass entsprechende Fasern der äußeren und gegenüberliegenden Oberflächenschichten des Vliesmaterials verdichtet und gepresst werden.

3. Verfahren gemäß einem der vorherigen Ansprüche, wobei das Heißpressen ein Ausüben eines solchen Drucks auf den definierten Teil umfasst, der bei 0,2 bis 0,6 MPa liegt.

4. Verfahren gemäß einem der vorherigen Ansprüche, wobei die Temperatur bei 110 °C bis 230 °C liegt.

5. Verfahren gemäß einem der vorherigen Ansprüche, wobei die Zeit bei 0,3 s bis 1 s liegt.

6. Verfahren gemäß einem der vorherigen Ansprüche, das das Stabilisieren einer Form des gepressten Teils (2, 3; 12) umfasst, wobei das Stabilisieren ein Kontaktkühlen, zum Beispiel für eine Zeit von 0,5 s bis 4 s, des gepressten Teils (2, 3; 12) umfasst, bis das gepresste Teil (2, 3; 12) eine Temperatur von unterhalb 35° erreicht.

7. Verfahren gemäß einem der vorherigen Ansprüche, das ferner ein Schneiden des Films (1) umfasst, um das Filterelement (5; 10; 15) zu erhalten.

8. Verfahren gemäß Anspruch 7, sofern auf Anspruch 6 rückbezogen, wobei das Schneiden nach dem Stabilisieren erfolgt, wobei das Schneiden ein Schneiden des Materials an dem gepressten und stabilisierten Teil (2; 12) umfasst.

9. Verfahren gemäß Anspruch 7, wobei das Schneiden vor dem Heißpressen erfolgt.

10. Verfahren gemäß einem der vorherigen Ansprüche, das ferner ein Schneiden des gepressten Teils (2; 12) umfasst, um ein Griffteil (6; 16) des Filterelements (5; 15) zu schaffen, das für einen Anwender greifbar ist.

11. Filterelement (5; 10; 15) eines Vliesmaterials, das nach dem Verfahren gemäß einem der Ansprüche 1 bis 10 hergestellt ist, wobei das Filterelement (5; 10; 15) geeignet ist, um einem Behälter (30; 50) zugeordnet zu werden oder ein Filtergehäuse zu bilden, eingerichtet zum Enthalten und/oder Zurückhalten eines Produkts (P) und zumindest ein heißgepresstes Teil (2; 3; 12) aufweist, in dem Fasern, insbesondere synthetische und/oder Kunststofffasern, von zumindest einer äußeren Oberflächenschicht des Vliesmaterials verdichtet und zusammengepresst sind, **dadurch gekennzeichnet, dass** eine Dicke des Vliesmaterials in dem heißgepressten Teil (2; 3; 12) um einen prozentualen Anteil reduziert ist, der bei 30 % bis 50 % in Bezug auf die Dicke des nicht verdichteten Vliesmaterials liegt, und dass entsprechende Oberflächenschichten in dem heißgepressten Teil (2; 3; 12) zumindest teilweise geschmolzen sind, und die Fasern auf reversible Weise miteinander verbunden sind, was es dem Vliesmaterial ermöglicht, in einen Zustand zurückzukehren, der ähnlich zu dem ursprünglichen Zustand ist.

12. Filterelement gemäß Anspruch 11, wobei das gepresste Teil (2; 3; 12) zwei äußere und gegenüberliegende Oberflächenschichten aufweist, in denen die Fasern verdichtet und zusammengepresst sind.

13. Behälter, der ein Gehäuse (31; 51) aufweist, das mit einem Hohlraum (35; 55) versehen ist, der ein Filterelement enthält oder durch ein Filterelement (5; 10; 15) gemäß Anspruch 11 oder 12 verschlossen ist.

## Revendications

1. Procédé de fabrication d'un élément filtrant (5 ; 10 ; 15) à partir d'un film (1) de matériau non tissé, ledit élément filtrant (5 ; 10 ; 15) étant apte à être associé à un contenant (30 ; 50) pour contenir et/ou retenir un produit (P), ledit procédé comprenant le pressage à chaud d'au moins une portion définie dudit matériau non tissé, de façon à obtenir une portion pressée (2, 3 ; 12) dans laquelle des fibres, en particulier des fibres synthétiques et/ou plastiques, d'au moins une couche de surface externe dudit matériau non tissé sont compactées et pressées ensemble, **caractérisé en ce que** ledit pressage à chaud comprend l'exercice sur ladite portion définie d'une pression comprise entre 0,1 et 1,0 MPa afin de réduire une épaisseur dudit matériau non tissé d'un pourcentage compris entre 30 et 50 % par rapport à l'épaisseur du matériau non tissé non comprimé, de façon à faire fondre au moins partiellement une couche de surface respective de chaque fibre afin de joindre ensemble lesdites fibres de manière réversible, permettant au matériau non tissé de revenir à un état qui est similaire à l'état d'origine, **en ce que** ledit pressage à chaud comprend le pressage de ladite portion définie à une température comprise entre 80 °C et 250 °C et **en ce que** ledit pressage à chaud comprend le pressage de ladite portion définie pendant un temps compris entre 0,1 s et 4 s.

2. Procédé selon la revendication 1, dans lequel ledit pressage à chaud comprend le pressage sur des côtés opposés dudit matériau non tissé de façon à compacter et à presser des fibres respectives de couches de surface externes et opposées dudit matériau non tissé.

3. Procédé selon une quelconque revendication précédente, dans lequel ledit pressage à chaud comprend l'exercice sur ladite portion définie d'une pression comprise entre 0,2 et 0,6 MPa.

4. Procédé selon une quelconque revendication précédente, dans lequel ladite température est comprise entre 110 °C et 230 °C.

5. Procédé selon une quelconque revendication précédente, dans lequel ledit temps est compris entre 0,3 s et 1 s.

6. Procédé selon une quelconque revendication précédente, et comprenant la stabilisation d'une forme de ladite portion pressée (2, 3 ; 12), dans lequel ladite stabilisation comprend le refroidissement par contact, par exemple pendant un temps de 0,5 s à 4 s, de ladite portion pressée (2, 3 ; 12) jusqu'à ce que ladite portion pressée (2, 3 ; 12) atteigne une température en dessous de 35°.

7. Procédé selon une quelconque revendication précédente, et comprenant le découpage dudit film (1) pour obtenir ledit élément filtrant (5 ; 10 ; 15).

8. Procédé selon la revendication 7, lorsqu'elle est annexée à la revendication 6, dans lequel ledit découpage est réalisé après ladite stabilisation, ledit découpage comprenant le découpage dudit matériau au niveau de ladite portion pressée et stabilisée (2 ; 12).

9. Procédé selon la revendication 7, dans lequel ledit découpage est réalisé avant ledit pressage à chaud.

10. Procédé selon une quelconque revendication précédente, et comprenant le découpage de ladite portion pressée (2 ; 12) pour réaliser une portion de saisie (6 ; 16) dudit élément filtrant (5 ; 15) pouvant être saisie par un utilisateur.

11. Elément filtrant (5 ; 10 ; 15) de matériau non tissé fabriqué par le procédé selon l'une quelconque des revendications 1 à 10, ledit élément filtrant (5 ; 10 ; 15) étant apte à être associé à un contenant (30 ; 50) ou pour former un boîtier filtrant qui est agencé pour contenir et/ou retenir un produit (P) et comprenant au moins une portion pressée à chaud (2, 3 ; 12) dans laquelle des fibres, en particulier des fibres synthétiques et/ou plastiques, d'au moins une couche de surface externe dudit matériau non tissé sont compactées et pressées ensemble, **caractérisé en ce qu'**une épaisseur dudit matériau non tissé dans ladite portion pressée à chaud (2, 3 ; 12) est réduite d'un pourcentage compris entre 30 et 50 % par rapport à l'épaisseur du matériau non tissé non comprimé et **en ce que** des couches de surface respectives dans ladite portion pressée à chaud (2, 3 ; 12) sont au moins partiellement fondues et lesdites fibres sont jointes ensemble de manière réversible, permettant au matériau non tissé de revenir à un état qui est similaire à l'état d'origine.

12. Elément filtrant selon la revendication 11, dans lequel ladite portion pressée (2, 3 ; 12) comprend deux couches de surface externes et opposées, dans lequel lesdites fibres sont compactées et pressées ensemble.

13. Contenant comprenant un boîtier (31 ; 51) doté d'une cavité (35 ; 55) contenant un élément filtrant ou fermé par un élément filtrant (5 ; 10 ; 15), selon la revendication 11 ou 12.
